# EUROPEAN PATENT APPLICATION

(11) **EP 4 668 961 A1**
(43) Date of publication of application: **24.12.2025**
(21) Application number: 23921914.0
(22) Date of filing: 16.02.2023
(51) Int. Cl.: H04W 72/1268

(54) **UPLINK TRANSMISSION METHOD AND APPARATUS, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/076619
(87) International publication number: WO 2024/168760

(57) **Abstract**

The present disclosure belongs to the field of communications, and relates to an uplink transmission method and apparatus, and a storage medium. The method comprises: a terminal performing, on at least two time domain positions, repetition transmission of the same uplink channel, and performing, at each time domain position among the at least two time domain positions, simultaneous transmission from multi-panel of the uplink channel. By means of the method, simultaneous transmission from multi-panel is supported, and repetition transmission of an uplink channel in the time domain is also supported; and better reliability and better uplink coverage performance are supported, and the effect of improving an uplink throughput can also be achieved under the rational scheduling of a system.

## Description

### TECHNICAL FIELD

The disclosure relates to the field of communication technology, in particular to an uplink transmission method, an apparatus and a storage medium.

### BACKGROUND

In order to ensure the reliability and throughput rate of transmission, in the related art, simultaneous transmission from multi-panel (STxMP) is implemented via a plurality of panels on a terminal towards a plurality of transmission and reception points (TRPs).

In the enhancement research of the STxMP, for the physical uplink shared channel (PUSCH) scheduled by single-downlink control information (S-DCI), an uplink space division multiplexing (SDM) transmission scheme and a single frequency network (SFN) SDM transmission scheme are supported. For the physical uplink control channel (PUCCH) scheduled by S-DCI, the SFN-based transmission scheme is supported.

### SUMMARY

Embodiments of the disclosure provide an uplink transmission method, an apparatus and a storage medium, which support both STxMP and repetition transmission of an uplink channel in a time domain. The technical solution is provided below.

According to a first aspect of embodiments of the disclosure, an uplink transmission method is provided. The method is performed by a terminal, and includes:
performing, on at least two time domain positions, a repetition transmission on the same uplink channel; and
performing, on each of the at least two time domain positions, a STxMP on the uplink channel.

According to a second aspect of embodiments of the disclosure, an uplink transmission apparatus is provided. The apparatus includes:
a sending module, configured to perform, on at least two time domain positions, a repetition transmission on the same uplink channel, and perform on each of the at least two time domain positions, a STxMP on the uplink channel.

According to a third aspect of embodiments of the disclosure, a terminal is provided. The terminal includes:
a processor; and
a transceiver connected to the processor;
in which the processor is configured to load and execute executable instructions to implement the uplink transmission method as described in the first aspect.

According to a fourth aspect of embodiments of the disclosure, a chip is provided. The chip includes a programmable logic circuit and/or a program instruction. When the chip is running, the uplink transmission method as described in the first aspect is implemented.

According to a fifth aspect of embodiments of the disclosure, a computer-readable storage medium is provided. The computer-readable storage medium stores at least one instruction, at least one program segment, a code set or an instruction set, and the at least one instruction, the at least one program segment, the code set or the instruction set is loaded and executed by a processor to implement the uplink transmission method as described in the first aspect.

According to a sixth aspect of embodiments of the disclosure, a computer program product or a computer program is provided. The computer program product or the computer program includes a computer instruction, which is stored in a computer-readable storage medium. When a processor of a computer reads the computer instruction from the computer-readable storage medium and executes the computer instruction, the computer is caused to implement the uplink transmission method as described in the first aspect.

The technical solution provided by the embodiments of the disclosure has the following beneficial effects.

In the uplink transmission method provided in the disclosure, the uplink channel is transmitted via at least two antenna panels/TRPs/transmission beams on each of the at least two time domain positions, thereby realizing the STxMP of the uplink channel. The same uplink channel is transmitted on each of the at least two time domain positions, thereby realizing the repetition transmission of the above uplink channel. The method supports both of the STxMP and the repetition transmission of the same uplink channel in the time domain, which implements a mixed transmission scheme combining the STxMP and the repetition transmission, to support better reliability and uplink coverage performance, and may also achieve an effect of enhancing uplink throughput under reasonable scheduling of the system.

### BRIEF DESCRIPTION OF THE DRAWINGS

In order to more clearly illustrate the technical solution in the embodiments of the disclosure, the drawings required for use in the description of the embodiments will be briefly introduced below. Obviously, the drawings described below are only some embodiments of the disclosure. For those skilled in the art, other drawings can be obtained based on these drawin gs without inventive works.
FIG. 1 is a schematic diagram of a communication system according to an example embodiment.
FIG. 2 is a schematic diagram of a communication system according to another example embodiment.
FIG. 3 is a schematic diagram of a communication system according to yet another example embodiment.
FIG. 4 is a schematic diagram of an uplink transmission process according to an example embodiment.
FIG. 5 is a schematic diagram of an uplink transmission process according to another example embodiment.
FIG. 6 is a flowchart of an uplink transmission method according to an example embodiment.
FIG. 7 is a flowchart of an uplink transmission method according to another example embodiment.
FIG. 8 is a flowchart of a configuration method in a first mode according to an example embodiment.
FIG. 9 is a flowchart of an uplink transmission method according to yet another example embodiment.
FIG. 10 is a flowchart of an uplink transmission method according to a further example embodiment.
FIG. 11 is a schematic diagram of a repetition transmission type according to an example embodiment.
FIG. 12 is a schematic diagram of a repetition transmission type according to another example embodiment.
FIG. 13 is a schematic diagram of a repetition transmission type according to yet another example embodiment.
FIG. 14 is a schematic diagram of a repetition transmission type according to a further example embodiment.
FIG. 15 is a schematic diagram of a repetition transmission type according to one another example embodiment.
FIG. 16 is a block diagram of an uplink transmission apparatus according to an example embodiment.
FIG. 17 is a schematic diagram of a terminal according to an example embodiment.
FIG. 18 is a schematic diagram of a network device according to an example embodiment.

### DETAILED DESCRIPTION

The embodiments of the disclosure are described in detail below, examples of which are shown in the accompanying drawings, in which the same or similar numbers represent the same or similar elements. The implementations described in the following example embodiments do not represent all implementations consistent with the disclosure. Instead, they are merely examples of apparatuses and methods consistent with some aspects of the disclosure as recited in the attached claims. In the description of the disclosure, unless otherwise specified, "/" means "or", for example, "A/B" means "A or B". The term "and/or" in the disclosure is merely used to describe association relationships of associated objects, which indicates that there may be three relationships. For example, "A and/or B" means A exists alone, A and B both exist, and B exists alone.

The terms used in the disclosure are for the purpose of describing specific embodiments only and are not intended to limit the disclosure. As used in the disclosure and the attached claims, the singular forms "a" and "the" are intended to include their plural forms as well, unless the context clearly indicates otherwise. It should be understood that the term "and/or" used herein refers to and includes any and all possible combinations of one or more of associated listed items.

It should be understood that although the terms "first", "second", "third", etc. may be used in the disclosure to describe various information, the information should not be limited to these terms. These terms are used only to distinguish information of the same type. For example, without departing from the scope of the disclosure, the first information may also be referred to as the second information, and similarly, the second information may also be referred to as the first information. Depending on the context, for example, the word "if" as used herein may be interpreted as "when", "while" or "in response to determining".

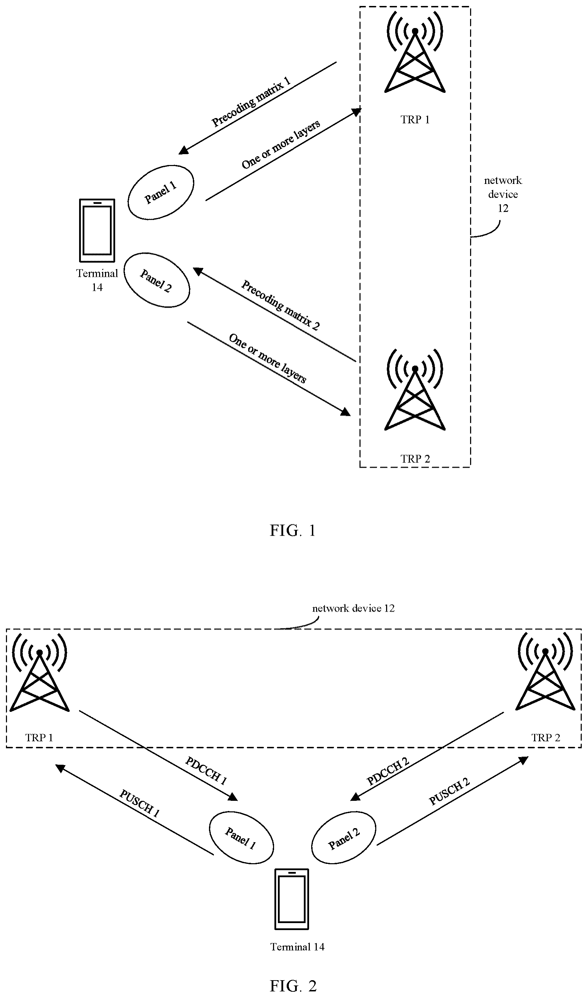

FIG. 1 is a schematic diagram of a communication system provided by an example embodiment of the disclosure. The communication system includes: a network device 12 and a terminal 14. The network device 12 includes a TRP1 and a TRP2.

The network device 12 may be a base station, which is an apparatus that provides a wireless communication function for the terminal 14. The base station may include various forms of macro base stations, micro base stations, relay stations, access points, and the like. In systems using different radio access technologies, names of devices with functions of the base station may be different. For example, in a long term evolution (LTE) system, it is called an evolved base station (eNodeB, eNB); and in a 5G new radio (NR) system, it is called a next generation base station (gNodeB, gNB). With the evolution of communication technologies, the expression of "base station" may change. For convenience of description in embodiments of the disclosure, the above apparatuses providing the wireless communication function for the terminal 14 are collectively referred to as the network device 12.

The terminal 14 may include various hand-held devices, in-vehicle devices, wearable devices, computing devices or other processing devices connected to a wireless modem devices with the wireless communication function, as well as various forms of user equipment (UE), mobile stations (MSs), terminal devices, and the like. For convenience of description, the above devices are collectively referred to as the terminal.

For example, there are two communication scenarios between the network device 12 and the terminal 14, namely, an uplink communication scenario and a downlink communication scenario. The uplink communication refers to the terminal 14 sending a signal to the network device 12, and the downlink communication refers to the network device 12 sending a signal to the terminal 14.

For the uplink, actually passed channel(s) for a PUSCH oriented to different TRPs may have significantly different spatial characteristics. Therefore, it is considered that a spatial reception parameter (such as Quasi CoLocation-typeD (QCL-D)) of PUSCHs in different transmission directions are different.

Release-15 (R15)/Release-16 (R16) did not consider a multi-TRP (M-TRP) scenario, and the uplink was transmitted via a single TRP. Release-17 (R17) has enhanced M-TRP uplink transmission under S-DCI, enabling an uplink PUSCH transmission towards a plurality of TRPs. In the third generation partnership project (3GPP) R17, a cooperative transmission under the time division multiplexing (TDM) transmission mode was mainly standardized. This involves the repetition transmission of the same information on the PUSCH to different TRPs in a time division manner via different transmission occasions (TOs) in the time domain. This method has a relatively low requirement on the capability of the terminal, does not require an ability to support simultaneous beam transmission, and has a relatively large transmission delay.

In the enhancement target of Release-18 (R18), the main expectation is to achieve simultaneous cooperative transmission towards a plurality of TRPs via a plurality of panels of the terminal, so as to increase the transmission reliability and throughput rate, and may also effectively reduce the transmission delay under the plurality of TRPs. However, this requires the terminal to have the capability of sending a plurality of beams simultaneously. The PUSCH may be, based on the plurality of panels scheduled by a single physical downlink control channel (PDCCH), i.e., S-DCI, transmitted to the plurality of TRPs, as shown in FIG. 1.

As shown in FIG. 1, a precoding matrix 1 and a precoding matrix 2 are directly or indirectly scheduled to the terminal by one piece of DCI. The terminal 14 sends uplink data of one or more layers to a TRP 1 using a panel 1 based on the precoding matrix 1. The terminal 14 sends uplink data of one or more layers to a TRP 1 using a panel 2 based on the precoding matrix 2.

Transmission of the PUSCH may also be based on a plurality of panels scheduled by different PDCCHs, i.e., multi-downlink control information (M-DCI), for transmission to a plurality of TRPs, as shown in FIG. 2.

As shown in FIG. 2, a TRP 1 sends first DCI to a terminal 14 via a PDCCH 1, to schedule the terminal 14 to use a panel 1 to send a PUSCH 1 to the TRP 1. A TRP 2 sends second DCI to the terminal 14 via a PDCCH 2 to schedule the terminal 14 to use a panel 2 to send a PUSCH 2 to the TRP 2.

In some embodiments, the above TRP1 and TRP2 may be two TRPs of the same cell, or two TRPs of different cells.

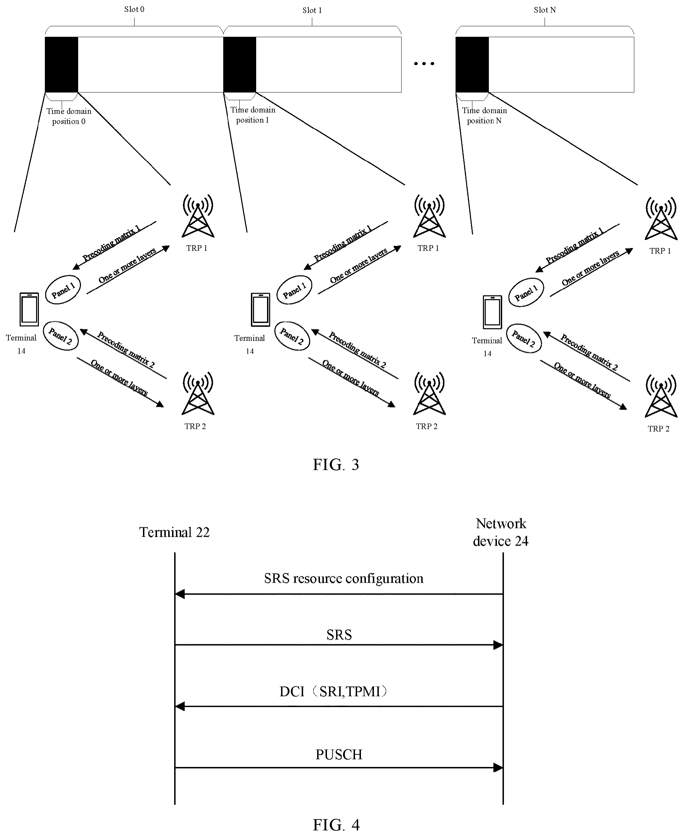

In the uplink transmission method provided in the disclosure, the repetition transmission is performed on the same uplink channel on the at least two time domain positions, and the STxMP is performed on the uplink channel on each of the at least two time domain positions. In an embodiment of the disclosure, as illustrated in FIG. 3, a precoding matrix 1 and a precoding matrix 2 are directly or indirectly scheduled to a terminal 14 by S -DCI. On each of N+1 time domain positions, the terminal 14 repeatedly transmits one or more layers of uplink channels to a TRP1 using a panel 1 based on the precoding matrix 1. Meanwhile, the terminal 14 repeatedly transmits one or more layers of uplink channels to a TPR2 using a panel 2 based on the precoding matrix 2.

For example, in a STxMP scenario, an uplink transmission process includes: a codebook-based uplink transmission process and a non-codebook-based uplink transmission process.

FIG. 4 is a schematic diagram illustrating a codebook-based uplink transmission process according to an example embodiment of the disclosure, which includes a terminal 22 and a network device 24.

In the codebook-based uplink transmission process, the network device 24 firstly sends a sounding reference signal (SRS) resource configuration to the terminal 22, and the SRS resource configuration includes at least one SRS resource and a time-frequency resource position of each SRS resource. Then, the terminal 22 sends at least one SRS to the network device 24 based on the SRS resource configuration. The network device 24 obtains a channel condition of each uplink channel based on the received at least one SRS, and then provides DCI to the terminal 22. The DCI at least includes an SRS resource indication (SRI) and a transmitted precoding matrix indicator (TPMI). Finally, the terminal 22 sends a PUSCH to the network device 24 based on the TPMI and the SRI.

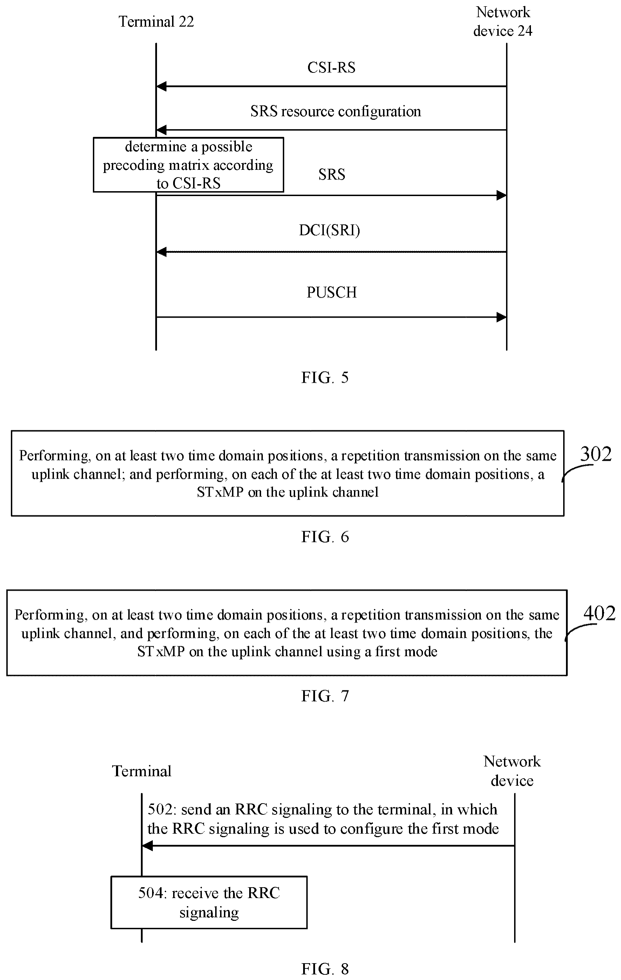

FIG. 5 is a schematic diagram of a non-codebook-based uplink transmission process provided by an example embodiment of the disclosure. The schematic diagram includes a terminal 22 and a network device 24.

In the non-codebook-based uplink transmission process, a precoding matrix is no longer limited in a fixed candidate set. The network device 24 firstly sends a channel state information-reference symbol (CSI-RS) and SRS resource configuration information to the terminal 22. The SRS resource configuration includes at least one SRS resource and the time-frequency resource position of each SRS resource. Then, the terminal 22 independently calculates, based on a measurement result of the CSI-RS, to obtain at least one precoding matrix possibly used via an algorithm such as a singular value decomposition algorithm. Then, the terminal 22 sends at least one SRS to the network device 24 based on the SRS resource configuration. The network device 24 obtains a channel condition of each uplink channel based on the received at least one SRS, and further provides DCI to the terminal 22. The DCI at least includes an SRI. Finally, the terminal 22 determines, according to the SRI, a precoding matrix to be used this time from the at least one precoding matrixes possibly used, and sends a PUSCH to the network device 24 according to the SRI and the precoding matrix used this time.

FIG. 6 is a flowchart of an uplink transmission method provided by an example embodiment of the disclosure. The method is applied to the terminal in the communication system shown in FIG. 1, and includes the following step.

At step 302, the terminal performs, on at least two time domain positions, a repetition transmission on the same uplink channel, and performs, on each of the at least two time domain positions, a STxMP on the uplink channel.

The terminal performs the STxMP on the uplink channel via at least two antenna panels/ TRPs/transmission beams. In an embodiment of the disclosure, there may be 2 or 4 antenna panels (which is also referred to as "panels").

On each of the at least two time domain positions, the uplink channel is transmitted via each antenna panel/TRP/transmission beam. In an embodiment of the disclosure, the at least two antenna panels include a first antenna panel and a second antenna panel. Alternatively, the at least two TRPs include a first TRP and a second TRP. Alternatively, the at least two transmission beams include a first transmission beam and a second transmission beam. On a first time domain position among the at least two time domain positions, the first antenna panel/first TRP/first transmission beam is associated to transmit the uplink channel. Meanwhile, on the first time domain position among the at least two time domain positions, the second antenna panel/second TRP/second transmission beam is associated to transmit the uplink channel. That is, on the same time domain position, the first antenna panel/first TRP/first transmission beam and the second antenna panel/second TRP/second transmission beam transmit the uplink channel simultaneously.

It should be noted that transmitting the uplink channel by associating the antenna panel/TRP/transmission beam may be understood as associating the antenna panel/TRP/transmission beam with the uplink channel, and transmitting the uplink channel via the antenna panel/TRP/transmission beam. It may also be described as that uplink information is transmitted based on the antenna panel/TRP/transmission beam.

In an embodiment of the disclosure, at least two antenna panels/TRPs/transmission beams transmit at least two uplink channels, i.e., transmitting different uplink channels. For example, the first antenna panel/first TRP/first transmission beam transmits a first uplink channel, and the second antenna panel/second TRP/second transmission beam transmits a second uplink channel.

In an embodiment of the disclosure, at least two antenna panels/TRPs/transmission beams collaboratively transmit the same data via the uplink channel. For example, a part of antenna panels/TRPs/transmission beams transmit a portion of the same data, and another portion of the antenna panels/TRPs/transmission beams transmit another portion of the same data. As another example, each antenna panel/TRP/transmission beam transmits a portion of the same data, and data portions transmitted by different antenna panels/TRPs/transmission beams are different.

Alternatively, at least two antenna panels/TRPs/transmission beams respectively transmit their associated data via the uplink channel. That is, different antenna panels/TRPs/transmission beams transmit different data.

In an embodiment of the disclosure, the uplink channel includes at least one of: a PUSCH or a PUCCH.

In an embodiment of the disclosure, the uplink channel is the PUSCH, and the PUSCH includes at least one of:
a dynamic grant (DG) PUSCH;
a configured grant (CG) PUSCH type 1; or
a CG PUSCH type 2.

In an embodiment of the disclosure, the uplink channel is the PUCCH, the PUCCH includes at least one of:
a PUCCH format0;
a PUCCH format1;
a PUCCH format2;
a PUCCH format3; or
a PUCCH format4.

On each of the at least two time domain positions, the same uplink channel is transmitted, i.e., the repetition transmission of the same uplink channel. In the STxMP scenario, each antenna panel/TRP/transmission beam performs the repetition transmission on its associated uplink channel using the above-mentioned repetition transmission mode. For example, in the STxMP scenario, on each of at least two time domain positions, the same uplink channel is transmitted via the first antenna panel/first TRP/first transmission beam. Meanwhile, on each of the at least two time domain positions, the same uplink channel is transmitted via the second antenna panel/second TRP/second transmission beam.

In an embodiment of the disclosure, the at least two time domain positions correspond to at least two groups of TOs, each group of TOs in the at least two groups of TOs includes at least two TOs, and the at least two TOs correspond one-to-one to at least two antenna panels/TRPs/transmission beams. All TOs in each group of TOs are at the same time domain position. The number of TOs in each group of TOs is the same as the number of antenna panels/TRPs/transmission beams used by the terminal. In an embodiment of the disclosure, if the number of antenna panels/TRPs/transmission beams is 2, each group of TOs includes 2 TOs, and the 2 TOs correspond one-to-one to the 2 antenna panels/TRPs/transmission beams. For example, the first antenna panel/first TRP/first transmission beam corresponds to a TO1, and the second antenna panel/second TRP/second transmission beam corresponds to a TO2.

In some embodiments, the at least two TOs included in each group of TOs overlap completely in a time domain.

In some embodiments, the at least two TOs included in each group of TOs overlap partially in the time domain.

In an embodiment of the disclosure, as illustrated in FIG. 3, at a time domain position 0, the panel 1 transmits the first uplink channel to the TRP1, and the panel 2 transmits the second uplink channel to the TRP2; at a time domain position 1, the panel 1 transmits the first uplink channel to the TRP1, and the panel 2 transmits the second uplink channel to the TRP2; ...; at a time domain position N, the panel 1 transmits the first uplink channel 1 to the TRP1, and the panel 2 transmits the second uplink channel to the TRP2, N being a positive integer greater than 1, thereby realizing the repetition transmission for the uplink channel and the STxMP at the N time domain positions.

In conclusion, according the uplink transmission method provided in the embodiment, the uplink channel is transmitted via at least two antenna panels/TRPs/transmission beams on each of the at least two time domain positions, thereby realizing the STxMP of the uplink channel. The same uplink channel is transmitted on each of the at least two time domain positions, thereby realizing the repetition transmission of the above uplink channel. The method supports both of the STxMP and the repetition transmission of the same uplink channel in the time domain, which implements a mixed transmission scheme combining the STxMP and the repetition transmission, to support better reliability and uplink coverage performance, and may also achieve the effect of enhancing uplink throughput under reasonable scheduling of the system.

In some embodiments, the terminal may perform the STxMP on the uplink channel using a first mode. In an embodiment of the disclosure, as illustrated in FIG. 7, the above step 302 may include following step 402.

At step 402, on at least two time domain positions, the repetition transmission is performed on the same uplink channel, and on each of the at least two time domain positions, the STxMP is performed on the uplink channel using a first mode.

The above first mode is any one of SDM, SFN and FDM.

In an embodiment of the disclosure, in the case that the uplink channel is a PUSCH, the first mode is any one of: SDM, SFN and FDM. For example, on each time domain position, the SDM, the SFN or the FDM is adopted to perform the STxMP on the uplink channel.

In an embodiment of the disclosure, in the case that the uplink channel is a PUSCH, the first mode is any one of: SFN and FDM. For example, on each time domain position, the SFN or the FDM is adopted to perform the STxMP on the uplink channel.

The SFN is an abbreviation of single frequency network space division multiplexing (SFN SDM).

In the SDM transmission scheme, different parts of one transport block (TB) of the PUSCH are sent, on the same time-frequency resources, to TRPs of different base stations via demodulation reference signal (DMRS) ports or port combinations allocated to different antenna panels/TRPs/transmission beams of the terminal. Different antenna panels/TRPs/TOs of the terminal are associated with different transmission configuration indication (TCI) states, i.e., beams, respectively.

In the SFN transmission scheme, one TB of the PUSCH is sent, on the same time-frequency resources, to TRPs of different base stations via the same DMRS port or port combination allocated to different antenna panels/TRPs/transmission beams of the terminal, respectively. Different antenna panels/TRPs/TOs of the terminal are associated with different TCI states, i.e., beams, respectively.

In the FDM transmission scheme, one TB or different parts of one TB of the PUSCH may be sent respectively, on time-frequency resources with the same time domain and different frequency domains, to TRPs of different base stations via corresponding DMRS ports or port combinations allocated to different antenna panels/TRPs/transmission beams of the terminal. Different antenna panels/TRPs/TOs of the terminal are associated with different TCI states, i.e., beams, respectively.

In an embodiment of the disclosure, the first mode is configured by a radio resource control (RRC) signaling. In an embodiment of the disclosure, the process of configuring the first mode for the terminal is shown in FIG. 8, and the steps are provided below.

At step 502, the network device sends an RRC signaling to the terminal, in which the RRC signaling is used to configure the first mode.

At step 504, the terminal receives the RRC signaling.

During subsequent uplink transmission, the terminal executes step 402 according to the first mode configured by the RRC signaling.

In conclusion, according the uplink transmission method provided in the embodiment, the STxMP is implemented via the SDM, the SFN, or the FDM, to implement the mixed transmission scheme combining the repetition transmission and the STxMP for the uplink channel, which supports better reliability and uplink coverage performance, and may also achieve the effect of enhancing uplink throughput under reasonable scheduling of the system.

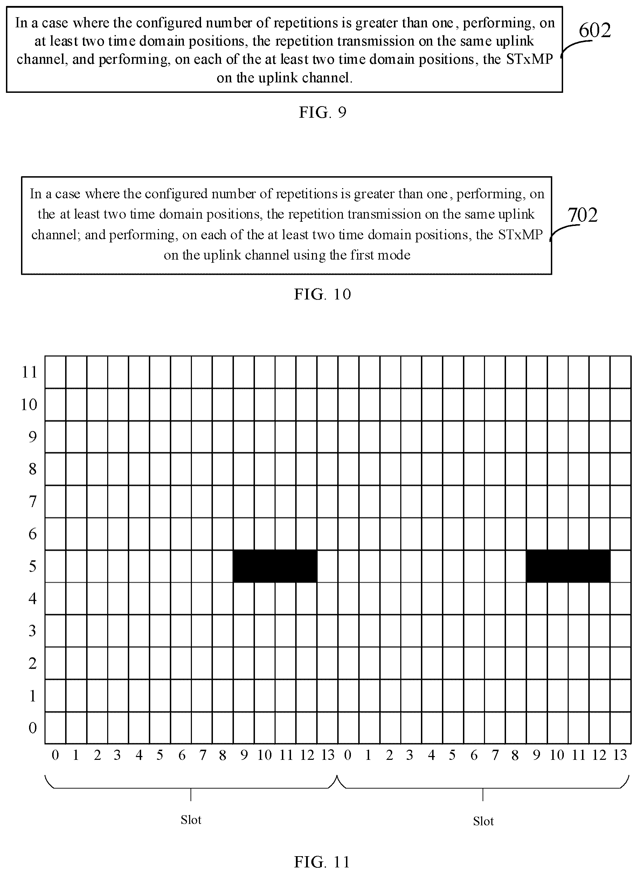

In some embodiments, the network device configures a number of repetitions for the terminal, and the terminal performs the repetition transmission on the uplink channel according to the configured number of repetitions. In an embodiment of the disclosure, the above step 302 may include step 602. As illustrated in FIG. 9, the step is provided below.

At step 602, in a case where the configured number of repetitions is greater than one, the repetition transmission is performed, on at least two time domain positions, on the same uplink channel. On each of the at least two time domain positions, the STxMP is performed on the uplink channel.

The above number of repetitions is configured by the network device.

In an embodiment of the disclosure, the number of repetitions configured by S-DCI is greater than one. In an embodiment of the disclosure, the uplink channel is the PUSCH, and in a case where the number of repetitions configured by the S-DCI is greater than one, the repetition transmission is performed, on the at least two time domain positions, on the same uplink channel.

In an embodiment of the disclosure, the above number of repetitions is configured by a repetition number parameter (i.e., numberOfRepetitions) included in a time domain resource allocation (TDRA) in the S-DCI.

In an embodiment of the disclosure, the terminal receives the S-DCI sent by the network device, reads a value of numberOfRepetitions contained in the TDRA in the S -DCI, to obtain the above number of repetitions. In a case where the number of repetitions is greater than one, the terminal performs, on at least two time domain positions, the repetition transmission on the same uplink channel.

In an embodiment of the disclosure, the uplink channel is the PUCCH, the number of repetitions indicated in a PUCCH configuration is greater than one, that is, the number of repetitions configured in the PUCCH configuration is greater than one. In an embodiment of the disclosure, in a case where the number of repetitions configured in the PUCCH configuration is greater than one, the repetition transmission is performed, on at least two time domain positions, on the same uplink channel.

In an embodiment of the disclosure, the above number of repetitions is configured by a slot repetition number parameter (nrofSlots) in the PUCCH configuration.

In an embodiment of the disclosure, the terminal receives the PUCCH configuration sent by the network device, reads a value of nrofSlots included in the PUCCH configuration, to obtain the above number of repetitions. In a case of the number of repetitions is greater than one, the terminal performs, on at least two time domain positions, the repetition transmission on the same uplink channel.

In an embodiment of the disclosure, performing, on the at least two time domain positions, the repetition transmission on the same uplink channel means transmitting the same uplink channel on each time domain position among the at least two time domain positions.

In conclusion, according the uplink transmission method provided in the embodiment, the number of repetitions in the repetition transmission is configured for the terminal. In the STxMP scenario, the repetition transmission of the uplink channel is also supported, to implement the mixed transmission scheme combining the repetition transmission and the STxMP for the uplink channel, which supports better reliability and uplink coverage performance, and may also achieve the effect of enhancing uplink throughput under reasonable scheduling of the system.

In some embodiments, the above step 302 may further include step 702. As illustrated in FIG. 10, the step 702 is provided below.

At step 702, in a case where the configured number of repetitions is greater than one, the repetition transmission is performed, on the at least two time domain positions, on the same uplink channel, and the STxMP is performed, on each of the at least two time domain positions, on the uplink channel using the first mode.

### ·Repetition transmission

The above number of repetitions is configured by the network device.

In an embodiment of the disclosure, the number of repetitions configured by the S-DCI is greater than one. In an embodiment of the disclosure, the uplink channel is the PUSCH, and in a case where the number of repetitions configured by the S-DCI is greater than one, the repetition transmission is performed, on the at least two time domain positions, on the same uplink channel.

In an embodiment of the disclosure, the above number of repetitions is configured by the numberOfRepetitions included in the TDRA in the S-DCI.

In an embodiment of the disclosure, the terminal receives the S-DCI sent by the network device, reads a value of numberOfRepetitions contained in the TDRA in the S -DCI, to obtain the above number of repetitions. In a case where the number of repetitions is greater than one, the terminal performs, on the at least two time domain positions, the repetition transmission on the same uplink channel.

In an embodiment of the disclosure, the uplink channel is the PUCCH, the number of repetitions indicated in the PUCCH configuration is greater than one, that is, the number of repetitions configured in the PUCCH configuration is greater than one. In an embodiment of the disclosure, in a case where the number of repetitions configured in the PUCCH configuration is greater than one, the repetition transmission is performed, on the at least two time domain positions, on the same uplink channel. In an embodiment of the disclosure, the above number of repetitions is configured by the nrofSlots in the PUCCH configuration.

In an embodiment of the disclosure, the terminal receives the PUCCH configuration sent by the network device, reads a value of the nrofSlots included in the PUCCH configuration, to obtain the above number of repetitions. In a case of the number of repetitions is greater than one, the terminal performs, on at least two time domain positions, the repetition transmission on the same uplink channel.

In an embodiment of the disclosure, performing, on the at least two time domain positions, the repetition transmission on the same uplink channel means transmitting the same uplink channel on each time domain position among the at least two time domain positions.

### ·STxMP

The above first mode is any one of the SDM, the SFN and the FDM.

In an embodiment of the disclosure, in the case that the uplink channel is a PUSCH, the first mode is any one of: SDM, SFN and FDM. For example, on each time domain position, the SDM, the SFN or the FDM is adopted to perform the STxMP on the uplink channel.

In an embodiment of the disclosure, in the case that the uplink channel is a PUSCH, the first mode is any one of: SFN and FDM. For example, on each time domain position, the SFN or the FDM is adopted to perform the STxMP on the uplink channel.

The SFN is an abbreviation of SFN SDM.

In the SDM transmission scheme, different parts of one TB of the PUSCH are sent, on the same time-frequency resources, to TRPs of different base stations via DMRS ports or port combinations allocated to different antenna panels/TRPs/transmission beams of the terminal. Different antenna panels/TRPs/TOs of the terminal are associated with different TCI states, i.e., beams, respectively.

In the SFN transmission scheme, one TB of the PUSCH is sent, on the same time-frequency resources, to TRPs of different base stations via the same DMRS port or port combination allocated to different antenna panels/TRPs/transmission beams of the terminal, respectively. Different antenna panels/TRPs/TOs of the terminal are associated with different T CI states, i.e., beams, respectively.

In the FDM transmission scheme, one TB or different parts of one TB of the PUSCH may be sent respectively, on time-frequency resources with the same time domain and different frequency domains, to TRPs of different base stations via corresponding DMRS ports or port combinations allocated to different antenna panels/TRPs/transmission beams of the terminal. Different antenna panels/TRPs/TOs of the terminal are associated with different TCI states, i.e., beams, respectively.

In an embodiment of the disclosure, the first mode is configured by the RRC signaling.

In conclusion, according the uplink transmission method provided in the embodiment, the STxMP is implemented via the SDM, the SFN, or the FDM, and the number of repetitions in the repetition transmission is configured for the terminal. In the STxMP scenario, the repetition transmission of the uplink channel is also supported, to implement the mixed transmission scheme combining the repetition transmission and the STxMP for the uplink channel, which supports better reliability and uplink coverage performance, and may also achieve the effect of enhancing uplink throughput under reasonable scheduling of the system.

In the above embodiments, the type of repetition transmission for the uplink channel is a repetition type A and/or a repetition type B.

### ·PUSCH

An uplink PUSCH time domain repetition transmission enhancement mode includes: a repetition type A transmission mode and a repetition type B transmission mode.

### 1) The repetition type A transmission mode of the PUSCH

One PUSCH is transmitted in N consecutive slots, that is, N TOs. The transmission starts on a S^{th} symbol in a starting slot. Each TO lasts for L symbols, while N+L does not exceed a slot boundary.

As illustrated in FIG. 11, the number of repetitions is two, and one TO in each slot occupies four symbols: symbols 9-12, and symbol positions occupied in two slots are the same.

Alternatively, one PUSCH is transmitted in N consecutive mini-slots, that is, N TOs. The transmission starts on a S^{th} symbol in a starting mini-slot. Each TO lasts for L symbols, while N+L does not exceed a mini-slot boundary.

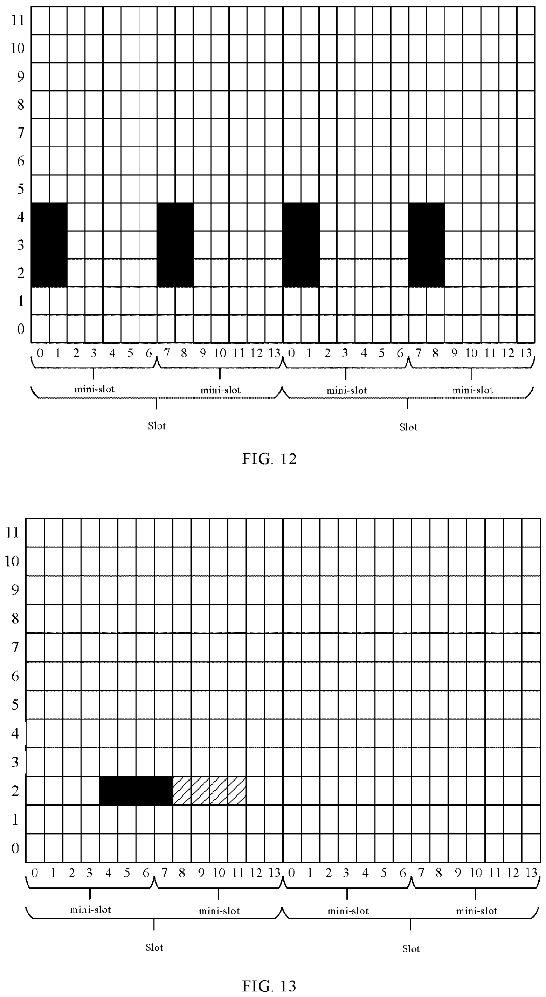

As illustrated in FIG. 12, the number of repetitions is four, and one TO in each mini-slot occupies two symbols. Symbols occupied by a first mini-slot in each slot are symbols 0-1, and symbols occupied by a second mini-slot are symbols 7-8, both of which are the first and second symbols in the mini-slot.

### 2) The repetition type B transmission mode of the PUSCH

In order to reduce delay and improve reliability, a repetition transmission scheme for the PUSCH in units of mini-slot is supported, and allowing a PUSCH transmission to across slots may further reduce the delay.

In the time domain, one PUSCH starts transmitting on the S^{th} symbol a in the starting slot, and N TOs (or nominal repetitions) are transmitted continuously. Each TO occupies L symbols back-to-back. The transmission of N+L may cross the slot boundary.

As illustrated in FIGS. 13-15, in a case where the TO crosses the slot boundary, the transmission is re-divided, corresponding to an actual number of transmissions N, that is, an actual repetition. For the entire transmission, the slot L*N represents a time window length of the PUSCH transmission, and a downlink (DL) symbol is discarded and not used for the PUSCH transmission. The base station may indicate, via a slot form indicator (SFI), that a semi-static flexible symbol is a dynamic uplink (UL) symbol or a dynamic DL symbol. Therefore, the semi-static flexible symbol may be an available symbol or an unavailable symbol for the PUSCH. In a case where there are one or more unavailable symbols, the one or more unavailable symbols need to be discarded, and then the transmission is performed on the remaining available symbols. The base station may further configure, via a signaling, an invalid symbol pattern that is unavailable for the UE. That is, the UE does not transmit uplink data on an invalid symbol indicated by the signaling.

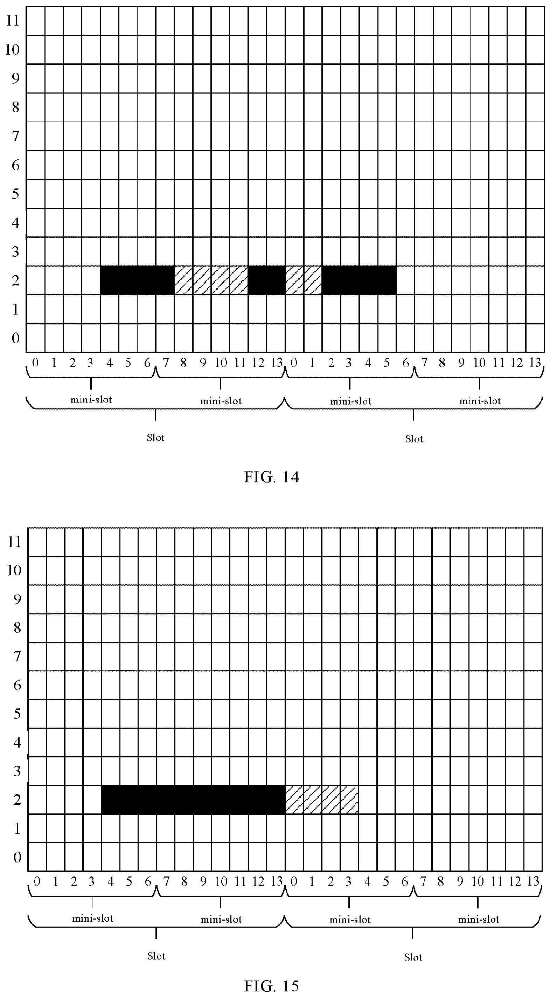

As illustrated in FIG. 13, N=2, L=4, S=5, that is, the first TO occupies symbols 4-7 within one slot, and the second TO occupies symbols 8-11 within the same slot. As shown in FIG. 14, N=4, L=4, S=5, that is, the first TO occupies symbols 4-7 within one slot, the second TO occupies symbols 8-11 within the same slot, the third TO, cross slots, occupies symbols 12-13 within the previous slot and symbols 0-1 within the subsequent slot, and the fourth TO occupies symbols 2-5 within one slot. As shown in FIG. 15, N=1, L=14, S=5, that is, one TO occupies symbols 4-13 within the previous slot and symbols 0-3 within the subsequent slot.

Transmission parameters of the repetition type A and the repetition type B of the PUSCH are defined as follows.

### Valid combinations of N and L

| PUSCH mapping type | Normal cyclic prefix | | | Extended cyclic prefix | | |
|---|---|---|---|---|---|---|
| | S | L | S+L | S | L | S+L |
| Type A (repetition Type A only) | 0 | {4,...,14} | {4,...,14} | 0 | {4,...,12} | {4,...,12} |
| Type B | {0,...,13} | {1,...,14} | repetition Type A: {1,...,14}; | {0,..., 11} | {1,...,12} | repetition Type A: {1,...,12}; |
| | | | repetition Type B: {1,...,27} | | | repetition Type B: {1,...,23} |

In an M-TRP transmission of PDSCH, a cooperative transmission of up to two different downlink TRPs is supported. In the TDM scheme, the transmission is similar to the Type A, which is a slot-level transmission. A mapping method of different beams (a beam direction is indicated as a TCI state) to different repeated TOs may be configured by a higher layer signaling in a semi-static manner to determine a specific transmission mapping scheme for each TB block.

A mapping relationship between the TCI state and the TO mainly includes the following schemes.

Scheme 1: Periodic mapping. Two TCI states are cyclically mapped to a plurality of configured TOs in sequence. For example, in a case of 4 transmissions, a mapping pattern of the TCI state is #1#2#1#2.

Scheme 2: Continuous mapping. Two TCI states are continuously and cyclically mapped to the plurality of configured TOs. For example, in a case of 4 transmissions, a mapping pattern of the TCI state is #1#1#2#2. In a case of more than 4 transmissions, the pattern is repeated. For example, in a case of 8 transmissions, the mapping pattern of the TCI state is #1#1#2#2#1#1#2#2#2.

In some embodiments, the network device configures the repetition type B of the PUSCH for the terminal, and may configure pusch-RepTypeIndicatorDCI-0-1-r16 as pusch-RepTypeB. For example, in the case of the repetition type B of the PUSCH, PUSCHs transmitted on different time domain positions among at least two time domain positions are mapped to the same or different time-frequency resources.

### ·PUCCH

An enhanced repetition mode of the PUCCH based on M-TRP may be considered as follows modes.
1) An inter-slot repetition mode, which adopts the TDM repetition transmission mode to realize a time-division joint transmission on a plurality of slots in directions of a plurality of beams facing a plurality of TRPs. One PUCCH resource may be used, or two PUCCH resources may be used.
2) An intra-slot repetition mode, which realizes the time-division joint transmission on different mini-slots within one slot in the directions of a plurality of beams facing a plurality of TRPs. One PUCCH resource may be used, or two PUCCH resources may be used.

In summary, according to the uplink transmission method provided by the disclosure, different repetition transmission modes for the uplink channel are provided. In the STxMP scenario, the repetition transmission for the uplink channel is supported to implement the mixed transmission scheme combining the STxMP and the repetition transmission. This scheme supports better reliability and uplink coverage performance, and achieves the effect of enhancing uplink throughput under reasonable scheduling of the system.

In each of the above embodiments, an association relationship between the antenna panel/TRP/transmission beam and the SRS resource set includes at least one of the following.
·The association relationship between the antenna panel/TRP/transmission beam and the corresponding SRS resource set on each of the at least two time domain positions is fixed.

For example, the at least two antenna panels include a first antenna panel and a second antenna panel. Alternatively, the at least two TRPs include a first TRP and a second TRP. Alternatively, the at least two transmission beams include a first transmission beam and a second transmission beam. The SRS resource sets used by the terminal includes a first SRS resource set and a second SRS resource set. On each time domain position, the first antenna panel/first TRP/first transmission beam is associated to the first SRS resource set correspondingly, and the second antenna panel/second TRP/second transmission beam is associated to the second SRS resource set correspondingly.

The above association relationship is configured by a network or predefined.

In an embodiment of the disclosure, the uplink channel is the PUSCH, the above association relationship is defined in an SRS resource set indicator. In an embodiment of the disclosure, the network device configures the above association relationship for the terminal via the SRS resource set indicator.

In an embodiment of the disclosure, the uplink channel is the PUCCH, the above association relationship is predefined.
·The association relationship between the antenna panel/TRP/transmission beam and the corresponding SRS resource set on all or part of the at least two time domain positions is different.

For example, the association relationship between the antenna panel/TRP/transmission beam and the SRS resource set on each time domain position among the at least two time domain positions is different. Alternatively, the association relationship between the antenna panel/TRP/transmission beam and the SRS resource set on a first portion of time domain positions among the at least two time domain positions is different, and the association relationship between the antenna panel/TRP/transmission beam and the SRS resource set on a second portion of time domain positions among the at least two time domain positions remains unchanged.

The above association relationship is configured by a network or predefined.

In an embodiment of the disclosure, an association relationship on an initial time domain position among the at least two time domain positions is configured by the network or predefined; and an association relationship on a time domain position other than the initial time domain position among the at least two time domain positions is determined according to the association relationship on the initial time domain position and a flip mapping pattern. The flip mapping pattern is any one of:
a flip based on a cyclic mapping;
a flip based on a sequential mapping; and
no flip.

The above flip based on the cyclic mapping means that the association relationship on a certain time domain position is obtained by flipping the association relationship on a previous time domain position.

In an embodiment of the disclosure, when the number of repetitions is 4, the number of antenna panels/TRPs/transmission beams is 2, and the number of SRS resource sets is 2, an association relationship 1 is that the first antenna panel/first TRP/first transmission beam is correspondingly associated with a first SRS resource set, and the second antenna panel/second TRP/second transmission beam is correspondingly associated with a second SRS resource set. An association relationship 2 is that the first antenna panel/first TRP/first transmission beam is correspondingly associated with the second SRS resource set, and the second antenna panel/second TRP/second transmission beam is correspondingly associated with the first SRS resource set. The association relationship on the initial time domain position is the association relationship 1, and the flip mapping pattern is the flip based on the cyclic mapping. The association relationships on the four time domain positions are determined to be the association relationship 1, the association relationship 2, the association relationship 1, and the association relationship 2 in sequence.

The above flip based the sequential mapping means that association relationships on subsequent N/2 time domain positions are obtained by flipping association relationships on previous N/2 time domain positions.

In an embodiment of the disclosure, when the number of repetitions is 4, the number of antenna panels/TRPs/transmission beams is 2, and the number of SRS resource sets is 2, an association relationship 1 is that the first antenna panel/first TRP/first transmission beam is correspondingly associated with the first SRS resource set, and the second antenna panel/second TRP/second transmission beam is correspondingly associated with the second SRS resource set. An association relationship 2 is that the first antenna panel/first TRP/first transmission beam is correspondingly associated with the second SRS resource set, and the second antenna panel/second TRP/second transmission beam is correspondingly associated with the first SRS resource set. The association relationship on the initial time domain position is the association relationship 1, and the flip mapping pattern is the flip based on the sequential mapping, and the association relationships on the four time domain positions are determined to be the association relationship 1, the association relationship 1, the association relationship 2, and the association relationship 2 in sequence.

"No flip" refers to a mapping method with an association relationship without flipping. In an embodiment of the disclosure, no flip includes at least one of cyclic mapping or sequential mapping.

The cyclic mapping refers to cyclically mapping at least three SRS resource sets to at least two antenna panels/TRPs/transmission beams. When the number of repetitions is 6, the number of antenna panels/TRPs/transmission beams is 2, and the number of SRS resource sets is 3, an association relationship 1 is that the first antenna panel/first TRP/first transmission beam is correspondingly associated with the first SRS resource set, and the second antenna panel/second TRP/second transmission beam is correspondingly associated with the second SRS resource set. An association relationship 2 is that the first antenna panel/first TRP/first transmission beam is correspondingly associated with a third SRS resource set, and the second antenna panel/second TRP/second transmission beam is correspondingly associated with the first SRS resource set. An association relationship 3 is that the first antenna panel/first TRP/first transmission beam is correspondingly associated with the second SRS resource set, and the second antenna panel/second TRP/second transmission beam is correspondingly associated with the third SRS resource set. The association relationship on the initial time domain position is the association relationship 1, the flip mapping pattern is the cyclic mapping, and the association relationships on the six time domain positions are determined to be the association relationship 1, the association relationship 2, the association relationship 3, the association relationship 1, the association relationship 2 and the association relationship 3 in sequence.

The sequential mapping refers to sequentially mapping at least four SRS resource sets to at least two antenna panels/TRPs/transmission beams. For example, when the number of repetitions is 2, the number of antenna panels/TRPs/transmission beams is 2, and the number of SRS resource sets is 4, an association relationship 1 is that the first antenna panel/first TRP/first transmission beam is correspondingly associated with the first SRS resource set, and the second antenna panel/second TRP/second transmission beam is correspondingly associated with the second SRS resource set. An association relationship 2 is that the first antenna panel/first TRP/first transmission beam is correspondingly associated with the third SRS resource set, and the second antenna panel/second TRP/second transmission beam is correspondingly associated with a fourth SRS resource set. An association relationship on the initial time domain position is the association relationship 1, the flip mapping pattern is the sequential mapping, and the association relationships on the two time domain positions are determined to be the association relationship 1 and the association relationship 2 in sequence.

In an embodiment of the disclosure, the above flip mapping pattern is predefined, defined by a protocol, or configured by a network.

In an embodiment of the disclosure, the network device indicates the flip mapping pattern based on a mappingPattern parameter.

In an embodiment of the disclosure, the above flip mapping pattern is configured by the network device based on a bit map. The bit map indicates the association relationship on each time domain position among the at least two time domain positions. For example, when the number of repetitions is 4, the number of antenna panels/TRPs/transmission beams is 2, and the number of SRS resource sets is 2, an association relationship 1 is that the first antenna panel/first TRP/first transmission beam is correspondingly associated with the first SRS resource set, and the second antenna panel/second TRP/second transmission beam is correspondingly associated with the second SRS resource set. An association relationship 2 is that the first antenna panel/first TRP/first transmission beam is correspondingly associated with the second SRS resource se, and the second antenna panel/second TRP/second transmission beam is correspondingly associated with the first SRS resource set. The association relationship on the initial time domain position is the association relationship 1. The flip mapping pattern is the flip based on the cyclic mapping. The bit map is represented as follow:

| First bit | Second bit | Third bit | Fourth bit |
|---|---|---|---|
| 0 | 1 | 0 | 1 |

The first bit corresponds to the initial time domain position, the second bit corresponds to a second time domain position, the third bit corresponds to a third time domain position, and the fourth bit corresponds to a fourth time domain position. A bit value "0" indicates the association relationship 1, and a bit value "1" indicates the association relationship 2.

In conclusion, the association relationship mapping method provided in the embodiment provides a mapping relationship between the antenna panel/TRP/transmission beam and the SRS resource set, so that the antenna panel/TRP/ transmission beam may use the same or different SRS resource sets to transmit, on different time domain positions, the uplink channel, to support the mixed transmission scheme combining the STxMP and the repetition transmission.

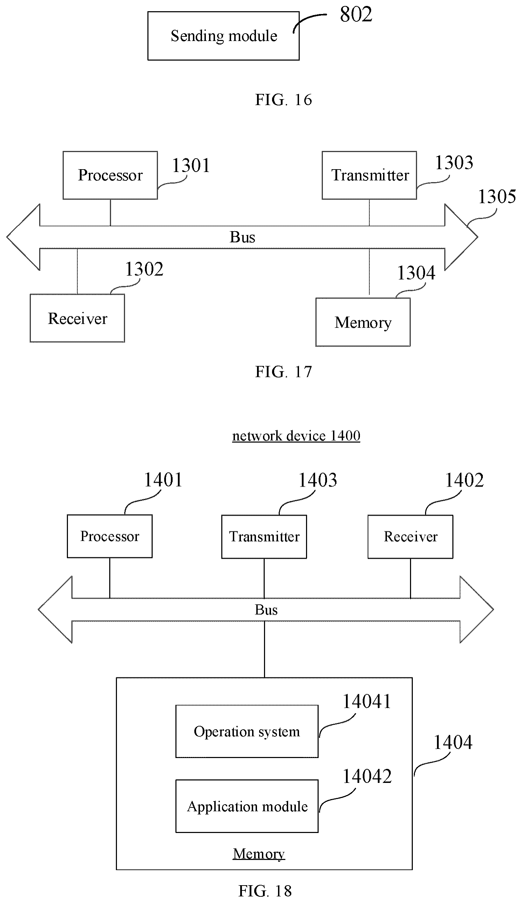

FIG. 16 is a block diagram of an uplink transmission apparatus provided by an example embodiment of the disclosure. The apparatus may be implemented as part or all of a terminal through software, hardware or a combination of both. The apparatus includes:
a sending module 802, configured to perform, on at least two time domain positions, a repetition transmission on the same uplink channel, and perform, on each of the at least two time domain positions, a STxMP on the uplink channel.

In some embodiments, the sending module 802 is configured to perform, on each of the at least two time domain positions, the STxMP on the uplink channel using a first mode;
in which the first mode is any one of SDM, SFN SDM, and FDM.

In some embodiments,
in a case that the uplink channel is a PUSCH, the first mode is any one of the SDM, the SFN SDM and the FDM; or
in a case that the uplink channel is a PUCCH, the first mode is any one of the SFN and the FDM.

In some embodiments, the first mode is configured by an RRC signaling.

In some embodiments, the sending module 802 is configured to associate, on a first time domain position among the at least two time domain positions, a first antenna panel/first TRP/first transmission beam to transmit the uplink channels, and associate, on the first time domain position among the at least two time domain positions, a second antenna panel/second TRP/second transmission beam to transmit the uplink channel.

In some embodiments, a number of repetitions configured by S-DCI is greater than one.

In some embodiments, in the case that the uplink channel is the PUCCH, a number of repetitions indicated in a PUCCH configuration is greater than one.

In some embodiments,
an association relationship between an antenna panel/TRP/transmission beam and a corresponding SRS resource set on each of the at least two time domain positions is fixed; or
an association relationship between the antenna panel/TRP/transmission beam and the corresponding SRS resource set on all or part of the at least two time domain positions is different.

In some embodiments, an association relationship on an initial time domain position among the at least two time domain positions is configured by a network or is pre defined; and
an association relationship on a time domain position other than the initial time domain position among the at least two time domain positions is determined according to the association relationship on the initial time domain position and a flip mapping pattern;
in which the flip mapping pattern is any one of:
   a flip based on a cyclic mapping;
   a flip based on a sequential mapping; and
   no flip.

In some embodiments, the at least two time domain positions correspond to at least two groups of TOs, each of the at least two groups of TOs comprises at least two TOs, and the at least two TOs are in one-to-one correspondence with at least two antenna panels/TRPs/transmission beams.

In some embodiments, the at least two TOs overlap completely in a time domain.

In some embodiments, in the case that the uplink channel is the PUSCH,
the PUSCHs transmitted on different time domain positions among the at least two time domain positions are mapped to the same time-frequency resource or to different time-frequency resources.

In some embodiments, in the case that the uplink channel is the PUSCH,
the PUSCH includes any one of:
a DG PUSCH;
a CG PUSCH type 1; and
a CG PUSCH type 2.

In some embodiments, in the case that the uplink channel is a PUCCH,
the PUCCH includes any one of:
a PUCCH format0;
a PUCCH format1;
a PUCCH format2;
a PUCCH format3; and
a PUCCH format4.

FIG. 17 is a schematic structural diagram of a terminal provided by an example embodiment of the disclosure. The terminal includes: a processor 1301, a receiver 1302, a transmitter 1303, a memory 1304 and a bus 1305.

The processor 1301 includes one or more processing cores. The processor 1301 executes various functional applications and information processing by running software programs and modules.

The receiver 1302 and the transmitter 1303 may be implemented as a communication component, such as a communication chip.

The memory 1304 is connected to the processor 1301 via the bus 1305.

The memory 1304 is configured to store at least one instruction, and the processor 1301 is configured to execute the at least one instruction to implement each step in the above method embodiments.

In addition, the memory 1304 may be implemented by any type of volatile or non-volatile storage device or a combination thereof. The volatile or non-volatile storage device includes, but is not limited to: a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In an example embodiment, a non-transitory computer-readable storage medium including instructions is also provided, such as a memory including instructions. The instructions are executed by a processor of a terminal to complete the above uplink transmission method. For example, the non-transitory computer readable storage medium may be a ROM, a random-access memory (RAM), a compact disc read only memory (CD-ROM), a magnetic tape, a floppy disk, an optical data storage device, and the like.

FIG. 18 is a block diagram of a network device 1400 according to an example embodiment. The network device 1400 may be a base station.

The network device 1400 includes: a processor 1401, a receiver 1402, a transmitter 1403, and a memory 1404. The receiver 1402, the transmitter 1403 and the memory 1404 are connected to the processor 1401 via buses, respectively.

The processor 1401 includes one or more processing cores, and the processor 1401 executes the steps of the uplink transmission method provided in the embodiments of the disclosure on the network device side by running software programs and modules. The memory 1404 is used to store software programs and modules. In detail, the memory 1404 stores an operation system 14041 and an application module 14042 required for at least one function. The receiver 1402 is used to receive communication data sent by other devices, and the transmitter 1403 is used to send communication data to other devices.

An exemplary embodiment of the disclosure also provides a computer-readable storage medium. The computer-readable storage medium stores at least one instruction, at least one program segment, or a code set or instruction set, and the at least one instruction, the at least one program segment, or the code set or instruction set is loaded and executed by a processor to implement the uplink transmission method provided by the above method embodiments.

An exemplary embodiment of the disclosure also provides a computer program product or a computer program. The computer program product or the computer program includes a computer instruction, and the computer instruction is stored in a computer-readable storage medium. A processor of a computer reads the computer instruction from the computer-readable storage medium and then executes the computer instruction, so that the computer is caused to implement the uplink transmission method provided in the above method embodiments.

It should be understood that "a plurality of' mentioned herein means two or more. Other implementations of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the attached claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. An uplink transmission method, performed by a terminal, comprising:
performing, on at least two time domain positions, a repetition transmission on the same uplink channel; and
performing, on each of the at least two time domain positions, a simultaneous transmission from multi-panel (STxMP) on the uplink channel.

2. The method of claim 1, wherein performing, on each of the at least two time domain positions, the STxMP on the uplink channel comprises:
performing, on each of the at least two time domain positions, the STxMP on the uplink channel using a first mode;
wherein the first mode is any one of space division multiplexing (SDM), single frequency network (SFN) SDM, and frequency division multiplexing (FDM).

3. The method of claim 2, wherein
in a case that the uplink channel is a physical uplink shared channel (PUSCH), the first mode is any one of the SDM, the SFN SDM and the FDM; or
in a case that the uplink channel is a physical uplink control channel (PUCCH), the first mode is any one of the SFN and the FDM.

4. The method of claim 2, wherein the first mode is configured by a radio resource control (RRC) signaling.

5. The method of claim 1, wherein performing, on each of the at least two time domain positions, the STxMP on the uplink channel comprises:
associating, on a first time domain position among the at least two time domain positions, a first antenna panel/first transmission and reception point (TRP)/first transmission beam to transmit the uplink channel; and
associating, on the first time domain position among the at least two time domain positions, a second antenna panel/second TRP/second transmission beam to transmit the uplink channel.

6. The method of any one of claims 1-5, wherein a number of repetitions configured by single-downlink control information (S-DCI) is greater than one.

7. The method of any one of claims 1-5, wherein the uplink channel is a PUCCH, a number of repetitions indicated in a PUCCH configuration is greater than one.

8. The method of any one of claims 1-5, wherein
an association relationship between an antenna panel/TRP/transmission beam and a corresponding sounding reference signal (SRS) resource set on each of the at least two time domain positions is fixed; or
an association relationship between the antenna panel/TRP/transmission beam and the corresponding SRS resource set on all or part of the at least two time domain positions is different.

9. The method of claim 8, wherein
an association relationship on an initial time domain position among the at least two time domain positions is configured by a network or is predefined; and
an association relationship on a time domain position other than the initial time domain position among the at least two time domain positions is determined according to the association relationship on the initial time domain position and a flip mapping pattern;
wherein the flip mapping pattern is any one of:
a flip based on a cyclic mapping;
a flip based on a sequential mapping; and
no flip.

10. The method of any one of claims 1-5, wherein the at least two time domain positions correspond to at least two groups of transmission occasions (TOs), each of the at least two groups of TOs comprises at least two TOs, and the at least two TOs are in one-to-one correspondence with at least two antenna panels/TRPs/transmission beams.

11. The method of claim 10, wherein the at least two TOs overlap completely in a time domain.

12. The method of any one of claims 1-5, wherein the uplink channel is a PUSCH; and
wherein the PUSCHs transmitted on different time domain positions among the at least two time domain positions are mapped to the same time-frequency resource or to different time-frequency resources.

13. The method of any one of claims 1-5, wherein the uplink channel is a PUSCH; and
wherein the PUSCH is any one of:
a dynamic grant (DG) PUSCH;
a configured grant (CG) PUSCH type 1; and
a CG PUSCH type 2.

14. An uplink transmission apparatus, comprising:
a sending module, configured to perform, on at least two time domain positions, a repetition transmission on the same uplink channel, and perform, on each of the at least two time domain positions, a STxMP on the uplink channel.

15. A terminal, comprising:
a processor; and
a transceiver connected to the processor;
wherein the processor is configured to load and execute executable instructions to implement the uplink transmission method according to any one of claims 1-13.

16. A computer-readable storage medium storing at least one instruction, at least one program segment, a code set or an instruction set, wherein a processor loads and executes the at least one instruction, the at least one program segment, the code set or the instruction set to implement the uplink transmission method according to any one of claims 1-13.
